# EUROPEAN PATENT APPLICATION

(11) **EP 4 825 453 A1**
(43) Date of publication of application: **21.10.2026**
(21) Application number: 26164500.6
(22) Date of filing: 13.03.2026
(51) Int. Cl.: A62C 35/10, H01M 10/613, H01M 10/655, H01M 10/6569, H01M 50/207, H01M 50/289, H01M 50/383

(54) **BATTERY MODULE**

(30) Priority: 17.04.2025 KR 20250050294
(71) Applicant: SAMSUNG SDI CO., LTD., Yongin-si, Gyeonggi-do 17084 (KR)
(72) Inventor: Jongwook, YOON, Yongin-si, Gyeonggi-do 17084 (KR)
(74) Representative: Gulde & Partner

(57) **Abstract**

Provided is a battery module including a plurality of battery cells and a first fire-extinguishing cell arranged above the plurality of battery cells, and the first fire-extinguishing cell includes an upper frame and a lower frame forming a space in which a first fire-extinguishing material is accommodated, and the lower frame includes a heat-sensitive portion which opens when a heat-sensitive reaction occurs.

## Description

### FIELD

The disclosure relates to a battery module.

### BACKGROUND

Secondary batteries are batteries that can be charged and discharged, unlike primary batteries that cannot be recharged. Low-capacity secondary batteries are used in small, portable electronic devices such as smartphones, feature phones, laptop computers, digital cameras, and camcorders, while high-capacity secondary batteries are widely used as power supplies for driving motors in hybrid cars, electric cars, or the like, and as power storage batteries. These secondary batteries include an electrode assembly including a positive electrode and a negative electrode, a case for accommodating the electrode assembly, electrode terminals connected to the electrode assembly, or the like.

The herein-described information disclosed in the background technology of the disclosure is only intended to improve understanding of the background of the disclosure and therefore may include information that does not constitute prior art.

### SUMMARY

The disclosure provides a battery module with improved stability.

However, the technical problems to be solved by the disclosure are not limited to the problems described herein, and other problems not mentioned may be clearly understood by those skilled in the art from the description of the disclosure described herein.

Embodiments of the disclosure disclose a battery module, including: a plurality of battery cells; and a first fire-extinguishing cell arranged above the plurality of battery cells, wherein the first fire-extinguishing cell includes an upper frame and a lower frame forming a space in which a first fire-extinguishing material is accommodated, and the lower frame includes a heat-sensitive portion which opens when a heat-sensitive reaction occurs.

In embodiments, each of the plurality of battery cells may include a vent portion, and the heat-sensitive portion may be positioned to overlap with the vent portion.

In embodiments, the first fire-extinguishing material may include an aluminum sulfate aqueous solution.

In embodiments, the heat-sensitive portion may include any one of an acrylonitrile butadiene styrene (ABS) resin, polypropylene (PP), polycarbonate (PC), polyethylene (PE), or polytetrafluoroethylene (PFA).

In embodiments, a second fire-extinguishing cell including a second fire-extinguishing material different from the first fire-extinguishing material may be further included, and the second fire-extinguishing cell may be arranged between the plurality of battery cells.

In embodiments, the first fire-extinguishing material may include (or be in) a liquid form, and the second fire-extinguishing material may include (or be in) a solid form.

In embodiments, foam may be generated (or the battery module may be configured such that foam is generated) when the first fire-extinguishing material and the second fire-extinguishing material are combined with one another.

In embodiments, the second fire-extinguishing material may include sodium bicarbonate. In embodiments, the second fire-extinguishing material may include saponin.

In embodiments, the second fire-extinguishing cell may include a second fire-extinguishing material in solid powder form, the second fire-extinguishing material being compressed and having a surface coated with a synthetic resin.

Embodiments of the disclosure disclose a battery module, including: a plurality of battery cells; a first fire-extinguishing cell arranged above the plurality of battery cells; and a second fire-extinguishing cell arranged between the plurality of battery cells, wherein the first fire-extinguishing cell includes a heat-sensitive portion, which opens when a heat-sensitive reaction occurs, at the bottom thereof.

In embodiments, the first fire-extinguishing cell may include a first fire-extinguishing material, and the second fire-extinguishing cell may include a second fire-extinguishing material that is different from the first fire-extinguishing material.

In embodiments, the first fire-extinguishing material may include (or be in) a liquid form, and the second fire-extinguishing material may include (or be in) a solid form.

In embodiments, foam may be generated when the first fire-extinguishing material and the second fire-extinguishing material are combined with one another.

In embodiments, the first fire-extinguishing material may include an aluminum sulfate aqueous solution.

In embodiments, the second fire-extinguishing material may include saponin.

In embodiments, the second fire-extinguishing material may include sodium bicarbonate. In embodiments, the heat-sensitive portion may be arranged to correspond to each of vent portions formed in the plurality of battery cells.

In embodiments, the heat-sensitive portion may include any one of an acrylonitrile butadiene styrene (ABS) resin, polypropylene (PP), polycarbonate (PC), polyethylene (PE), or polytetrafluoroethylene (PFA).

In embodiments, the second fire-extinguishing cell may include a second fire-extinguishing material in solid powder form, the second fire-extinguishing material being compressed and having a surface coated with a synthetic resin.

Embodiments of the disclosure disclose a method for manufacturing a battery module, including: providing a plurality of battery cells; and providing a first fire-extinguishing cell arranged above the plurality of battery cells, wherein the first fire-extinguishing cell includes an upper frame and a lower frame forming a space in which a first fire-extinguishing material is accommodated, and the lower frame includes a heat-sensitive portion which opens when a heat-sensitive reaction occurs.

### BRIEF DESCRIPTION OF THE DRAWINGS

The following drawings attached to the specification illustrate preferred embodiments of disclosure and, together with the detailed description of the disclosure described herein, serve to further understand the technical idea of the disclosure. Therefore, the disclosure should not be interpreted as being limited only to matters described in such drawings:
FIG. 1 is a perspective view schematically illustrating an example of a battery module according to embodiments of the disclosure;
FIG. 2 is an exploded perspective view schematically illustrating an example of a battery module according to embodiments of the disclosure;
FIG. 3 is a perspective view schematically illustrating an example of a battery cell of the battery module of FIG. 2;
FIG. 4 is a cross-sectional view schematically illustrating an example of a cross-section taken along line I-I' of FIG. 3;
FIG. 5 is an exploded perspective view schematically illustrating an example of a first fire-extinguishing cell of the disclosure; and
FIG. 6 is an exploded perspective view schematically illustrating an example of a second fire-extinguishing cell of the disclosure.

### DETAILED DESCRIPTION

Hereinafter, preferred embodiments of the disclosure will be described in detail with reference to the attached drawings. Prior to this, the terms or words used in the specification and claims should not be interpreted as limited to usual or dictionary meanings and should be interpreted as meanings and concepts that conform to the technical idea of the disclosure based on the principle that the inventor can appropriately define the concept of a term to explain his or her own disclosure in the best way. Accordingly, the embodiments described in the specification and the configurations illustrated in the drawings are only some of the most preferred embodiments of the disclosure and do not represent all the technical idea of the disclosure, and therefore, it should be understood that there may be various equivalents and modified examples that may replace them at the time of filing the application.

In some embodiments, when used herein, the words "comprise", "include" and/or "comprising", "including" specify the presence of stated features, numbers, steps, operations, members, elements and/or groups thereof, but do not exclude the presence or addition of one or more other features, numbers, operations, members, elements and/or groups thereof.

In some embodiments, to aid understanding of the disclosure, the attached drawings are not drawn to the actual scale and the dimensions of some components may be exaggerated. In some different embodiments, the same reference numbers may be assigned to the same components.

Although the terms first, second, or the like are used to describe various components, these components are not limited by these terms. These terms are only used to distinguish a component from another, and unless otherwise stated, it is of course the case that a first component may also be a second component.

Throughout the specification, unless otherwise specifically stated, each component may be singular or plural.

Any configuration being arranged "at the top (or bottom) of" a component or "on (or below)" a component may mean not only that any configuration is arranged in contact with the upper surface (or lower surface) of the component, but also that other configuration may be interposed between the component and any configuration arranged on (or below) the component.

In some embodiments, in case that it is described that a component is "connected," "coupled," or "linked" to another component, it should be understood that the components may be directly connected or linked to one another, but that other components may also be "interposed" between each components, or that each components may be "connected," "coupled," or "linked" through other components. In some embodiments, when we say that a part is electrically coupled to another part, this includes not only cases where the parts are directly connected to one another, but also cases where the parts are connected to one another with another element interposed therebetween.

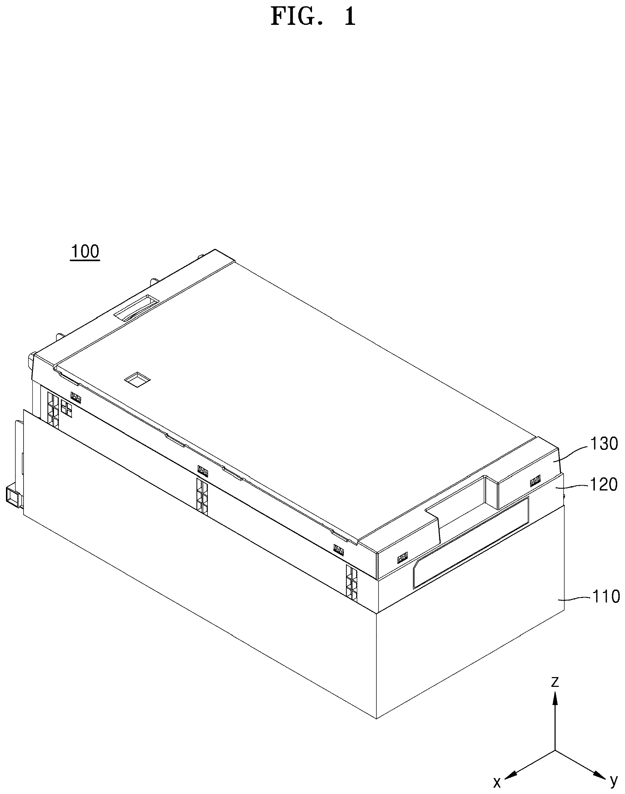

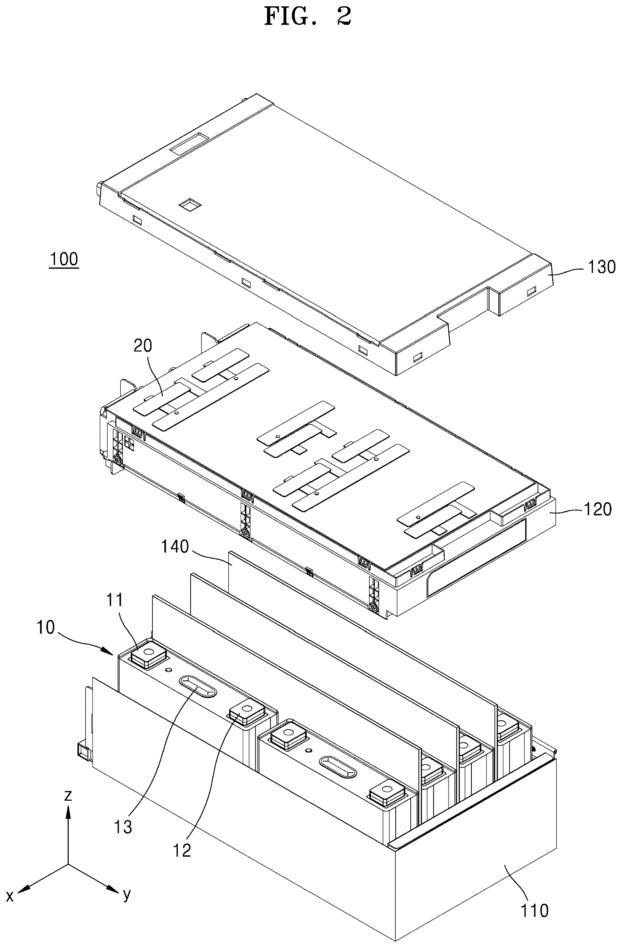

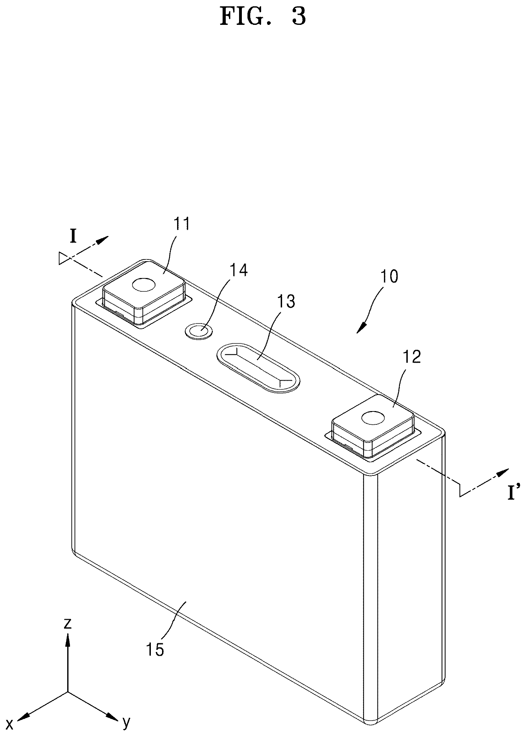

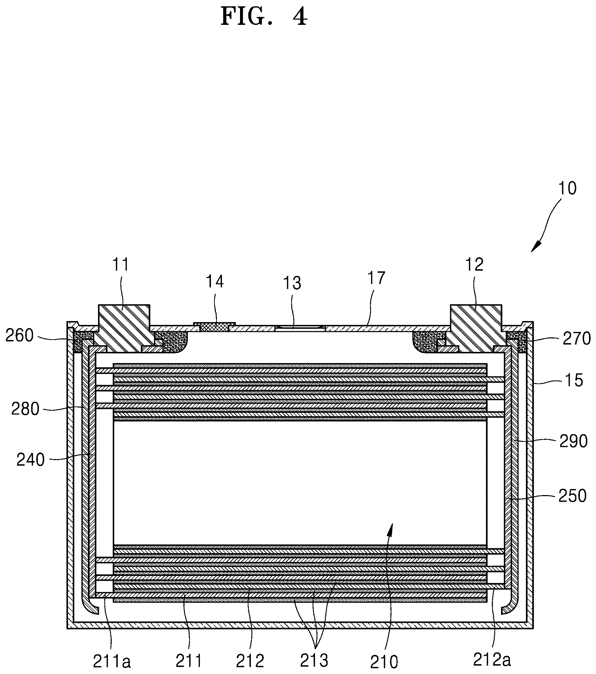

FIG. 1 is a perspective view schematically illustrating an example of a battery module according to embodiments of the disclosure, FIG. 2 is an exploded perspective view schematically illustrating an example of a battery module according to embodiments of the disclosure, FIG. 3 is a perspective view schematically illustrating an example of a battery cell of the battery module of FIG. 2, and FIG. 4 is a cross-sectional view schematically illustrating an example of a cross-section taken along line I-I' of FIG. 3.

Referring to FIGS. 1 to 4, a battery module 100 according to embodiments of the disclosure may include a plurality of battery cells 10, a first fire-extinguishing cell 130 positioned above the battery cells 10, and a holding portion 120.

The battery module 100 may include a plurality of battery cells 10 each provided with a terminal portion including a first terminal 11 and a second terminal 12 and arranged along a first direction x or a second direction y. The plurality of battery cells 10 may be arranged along a direction x so that the wide surfaces of the battery cells 10 face one another, and the plurality of battery cells 10 arranged in a row may be arranged again along another direction y. The plurality of battery cells 10 which are arranged may be accommodated by a housing 110 which supports the side surfaces and lower surfaces of the battery cells 10.

At a side of a battery cell 10 (e.g., on a top side of a battery cell 10), a terminal portion electrically coupled to a connection tab 20 and a vent portion 13 which is a passage for discharging gas generated internally may be provided. The terminal portion of the battery cell 10 may be a first terminal 11 and a second terminal 12 having different polarities. In some embodiments, in case that the first terminal 11 is a positive terminal, the second terminal 12 may be a negative terminal, and conversely, in case that the first terminal 11 is a negative terminal, the second terminal 12 may be a positive terminal. That is, the first terminal 11 and the second terminal 12 may include electrically different polarities, and each may not be limited to a specific polarity.

The battery cell 10 may include a case 15, an electrode assembly 210 accommodated within the case 15, and electrolyte. The electrode assembly 210 and the electrolyte may react electrochemically to generate energy.

A battery cell 10 according to embodiments may include at least one electrode assembly 210 wound with a separator 213, which is an insulator, interposed between a positive electrode 211 and a negative electrode 212, and a case 15 in which the electrode assembly 210 is accommodated.

The battery cell 10 according to embodiments may be described as including a square shape as an example. However, the disclosure is not limited thereto, and the disclosure may be applied to various types of battery cells such as pouch-shaped battery cells or cylindrical battery cells.

The positive electrode 211 and the negative electrode 212 may include a coated portion, which is an area where an active material is applied to a current collector including a metal foil of a thin plate, and non-coated portions 211a and 212a, each of which is an area where the active material is not applied.

The positive electrode 211 and the negative electrode 212 may be wound with the separator 213, which is an insulator, interposed therebetween. However, the disclosure is not limited thereto, and the electrode assembly 210 described herein may include a structure in which a positive electrode and a negative electrode including a plurality of sheets are alternately laminated with one another with a separator in between.

The case 15 may form the overall appearance of the battery cell 10 and may include a conductive metal such as aluminum, an aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 each may include a conductive material. In this regard, the first terminal 11 and the second terminal 12 may be electrically coupled to the positive electrode 211 and the negative electrode 212 may be installed to protrude outward by penetrating through the cap plate 17.

In some embodiments, the outer main surfaces of the upper pillars of the first terminal 11 and the second terminal 12 protruding outward from the cap plate 17 may be threaded and each may be fixed to the cap plate 17 with a nut.

However, the disclosure is not limited thereto, and each of the first terminal 11 and the second terminal 12 may include a rivet structure and may be riveted or may be welded to the cap plate 17.

In some embodiments, the cap plate 17 may include a thin plate to be coupled to the opening of the case 15, and in the cap plate 17, an electrolyte injection port 14 in which a sealing plug may be installed may be formed and a vent portion 13 with a notch formed may be installed.

Each of the first terminal 11 and the second terminal 12 may be electrically coupled to a current collector including a first current collector 240 and a second current collector 250 (hereinafter referred to as a positive electrode current collector and negative electrode current collector) welded to a positive electrode uncoated portion 211a or a negative electrode uncoated portion 212a.

In some embodiments, the first terminal 11 and the second terminal 12 may be welded to the positive electrode current collector 240 and the negative electrode current collector 250. However, the disclosure is not limited thereto, and the first terminal 11 and the second terminal 12 and the positive electrode current collector 240 and the negative electrode current collector 250 may be formed by being integrally coupled to one another.

In some embodiments, an insulating member may be installed between the electrode assembly 210 and the cap plate 17. In this regard, the insulating member may include a first lower insulating member 260 and a second lower insulating member 270, and each of the first lower insulating member 260 and the second lower insulating member 270 may be installed between the electrode assembly 210 and the cap plate 17.

In some embodiments, an end of a separation member which may be installed facing a side surface of the electrode assembly 210 may be installed between the insulating member and the first terminal 11 and the second terminal 12.

In this regard, the separation member may include a first separation member 280 and a second separation member 290.

Accordingly, an end of the first separation member 280 and an end of the second separation member 290, each of which may be installed facing a side surface of the electrode assembly 210, may be installed between the first lower insulating member 260 and second lower insulating member 270 and the first terminal 11 and second terminal 12.

Finally, the first terminal 11 and the second terminal 12 welded to the positive electrode current collector 240 and the negative electrode current collector 250 may be coupled to the first lower insulating member 260 and the second lower insulating member 270 and to an end of the first separation member 280 and an end of the second separation member 290.

In some embodiments, the first fire-extinguishing cell 130 may be arranged above the battery cells 10. In some embodiments, the first fire-extinguishing cell 130 may be arranged adjacent to a terminal portion including a first terminal 11 and a second terminal 12 of a battery cell 10. In case that the first fire-extinguishing cell 130 is arranged above the battery cells 10 as in embodiments of the disclosure, it may have the effect of dissipating heat generated from a battery cell 10, and specifically, it may quickly absorb and cool heat generated in a terminal portion of a battery cell 10, thereby delaying or preventing a temperature increase in a battery cell 10.

The battery module 100 may further include a holding portion 120 for arranging connection tabs 20 which connect terminal portions of a plurality of battery cells 10. The battery cells 10, which are adjacent to one another, may be electrically coupled in series and/or in parallel to one another by a connection tab 20 of the holding portion 120, and it goes without saying that various connection structures may be adopted as needed. In some embodiments, the number and arrangements of battery cells 10 are not limited to the structure shown in FIG. 2 and may be changed as needed.

The holding portion 120 may be arranged between the battery cells 10 and the first fire-extinguishing cell 130, and the first fire-extinguishing cell 130 may be coupled to the holding portion 120 or the housing 110 to form an internal space. In this regard, the first fire-extinguishing cell 130 may be coupled to the holding portion 120 or the housing 110 by using fastening members such as bolts, but this is not limited thereto, and any method that may be used for fastening may be possible. A plurality of battery cells 10 may be accommodated in the internal space.

In some embodiments, the battery module 100 may further include a second fire-extinguishing cell 140. In some embodiments, a plurality of second fire-extinguishing cells 140 may be arranged between a plurality of battery cells 10 along a direction x. In some embodiments, the second fire-extinguishing cells 140 may be arranged between the wide surfaces of a plurality of battery cells 10 facing one another.

Through this, the second fire-extinguishing cells 140 may maintain spacing between a plurality of battery cells 10 and prevent heat transfer between a plurality of battery cells 10 arranged adjacent to one another, thereby extending the life of the battery module 100 and improving reliability.

In case that the temperature of a battery cell 10 increases, the electrolyte inside the battery cell 10 may be thermally decomposed and flammable gas may be generated. In some embodiments, oxygen may be generated due to the decomposition of oxide of the positive electrode in a battery cell 10. As a result, all three elements of fire, heat, fuel (combustible gas), and oxygen, may be generated, causing thermal runaway in the battery cell 10, and the thermal runaway may propagate to other battery cells 10 adjacent the battery cell 10 due to heat generation and explosion.

The first fire-extinguishing cell 130 may cover the upper portions of battery cells 10 together with the holding portion 120 to protect the battery cells 10 from mechanical shocks or thermal shocks, and the second fire-extinguishing cells 140 may be arranged between the battery cells 10 to prevent and alleviate heat transfer by preventing direct contact between the battery cells 10 adjacent to one another. The first fire-extinguishing cell 130 and the second fire-extinguishing cell 140 may discharge heat generated inside the battery module 100 to the outside and suppress heat transfer between the battery cells 10, thereby delaying the heat transfer time and improving the stability of the battery module 100.

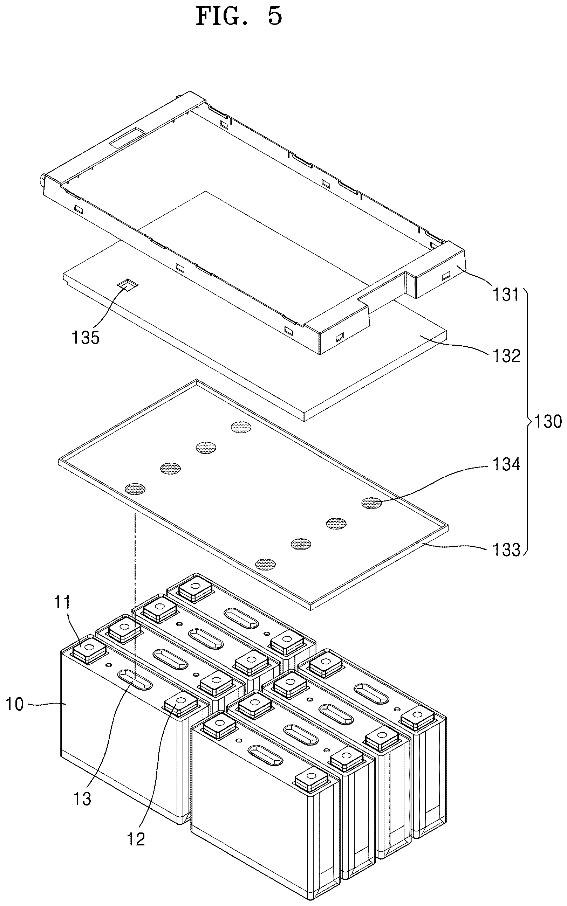

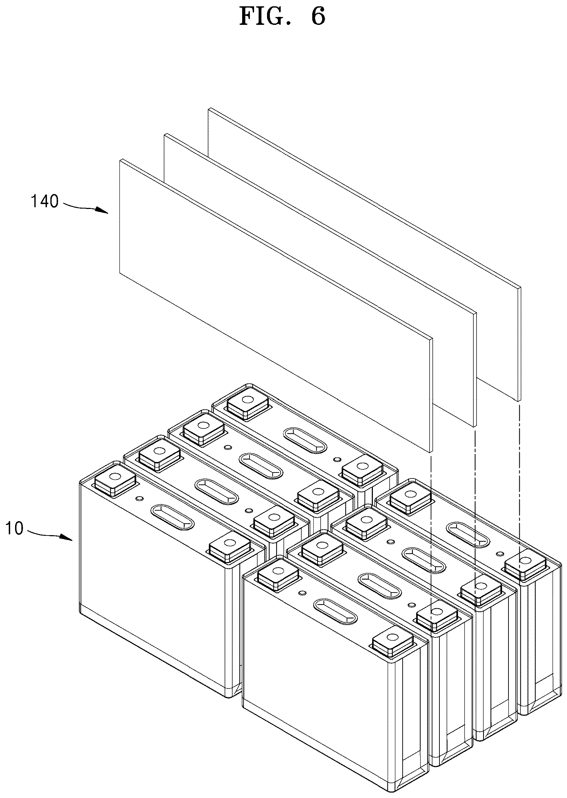

FIG. 5 is an exploded perspective view schematically illustrating an example of a first fire-extinguishing cell of the disclosure, and FIG. 6 is an exploded perspective view schematically illustrating an example of a second fire-extinguishing cell of the disclosure. Referring to FIGS. 5 and 6, the first fire-extinguishing cell 130 may include a fire-extinguishing cell cover 131, an upper frame 132, and a lower frame 133.

The upper frame 132 and the lower frame 133 may be coupled to one another to form an internal space, and a first fire-extinguishing material may be accommodated in the formed internal space. In some embodiments, at least one injection port 135 capable of injecting the first fire-extinguishing material may be arranged in a surface of the first fire-extinguishing cell 130, specifically, in a surface of the upper frame 132. The injection port 135 may be sealed after the first fire-extinguishing material is injected into the first fire-extinguishing cell 130, and may be sealed, for example, by a cover or stopper, to prevent leakage and escape of the first fire-extinguishing material. The first fire-extinguishing cell 130 may protect the first fire-extinguishing material from external impact, contamination, deterioration, or the like, and the first fire-extinguishing material may be stably stored inside the first fire-extinguishing cell 130 and maintain fire-extinguishing performance. The fire-extinguishing cell cover 131 may be for coupling the upper frame 132 to the lower frame 133, and may be, for example, in the form of surrounding the coupling line of the upper frame 132 and the lower frame 133. The fire-extinguishing cell cover 131 may secure the frames so that the first fire-extinguishing material does not leak outside the first fire-extinguishing cell 130 and may improve the structural stability of the first fire-extinguishing cell 130. The fire-extinguishing cell cover 131 may be coupled to the frames using, for example, fastening members such as bolts, but this is not limited thereto. The first fire-extinguishing material may be stored in the internal space of the first fire-extinguishing cell 130 by the upper frame 132, the lower frame 133 and the fire-extinguishing cell cover 131 and may lower the temperature of battery cells 10. In some embodiments, the first fire-extinguishing cell 130 may be arranged adjacent to a terminal portion of a battery cell 10, and the battery cell 10 may release heat through the first fire-extinguishing cell 130. The first fire-extinguishing cell 130 may be arranged in an area where local heat generation is high, so that the first fire-extinguishing cell 130 may quickly absorb heat generated from a battery cell 10 or cool the battery cell 10, thereby improving the stability of the battery module.

In some embodiments, the lower frame 133 may include a heat-sensitive portion 134 positioned to overlap with a vent portion 13 of a battery cell 10, and the heat-sensitive portion 134 may quickly detect a temperature change in the battery cell 10. In case that the temperature of a battery cell 10 increases or fire occurs, a part of the lower frame 133 may melt and the first fire-extinguishing material may leak out, and specifically, the first fire-extinguishing material may leak out as the heat-sensitive portion 134 melts due to high-temperature gas or flame discharged from a vent portion 13. The heat-sensitive portion 134 may have a lower melting point than other areas of the lower frame 133 and may be melted in response to a temperature increase of a battery cell 10 before the other areas. As the heat-sensitive portion 134 is deformed by heating, an area of the first fire-extinguishing cell 130 may be opened, and the first fire-extinguishing material may be released outside the first fire-extinguishing cell 130 toward a battery cell 10 to cool or extinguish the battery cell 10.

Embodiments may include a heat-sensitive portion 134 having a lower melting point than the surrounding area in the lower frame 133, so that in case that the temperature of a battery cell 10 increases or high-temperature gas or flame is discharged from a vent portion 13, the first fire-extinguishing material may be discharged from the first fire-extinguishing cell 130, and specifically, the fire-extinguishing material may be preferentially discharged around a heat-sensitive portion 134 to efficiently suppress thermal runaway of the battery module.

In some embodiments, the heat-sensitive portion 134 may include any one of an acrylonitrile butadiene styrene (ABS) resin, polypropylene (PP), polycarbonate (PC), polyethylene (PE), or polytetrafluoroethylene (PFA), but this is not limited thereto. Accordingly, the heat-sensitive portion 134 may function as a nozzle which sprays the first fire-extinguishing material toward a battery cell 10 where thermal runaway has occurred while melting and opening in the range of 80°C to 250°C.

In case that the melting point of the heat-sensitive portion 134 is less than 80°C, the heat-sensitive portion 134 may melt and the first fire-extinguishing material may be sprayed even with a temporary temperature increase due to heat generated during the charging/discharging process or heat dissipation from the parts adjacent thereto, making it difficult to secure appropriate fire-extinguishing performance. Conversely, in case that the melting point of the heat-sensitive portion 134 exceeds 250°C, it may be difficult to detect a temperature change in a battery cell 10 or respond quickly to thermal runaway therein, thereby effectively preventing the spread of fire to the battery cells 10 adjacent to the battery cell 10. Hence, the melting point of the heat-sensitive portion 134 may be between 80°C and 250°C. In some embodiments, the shape shown in FIG. 5 is an example, and the shape of the heat-sensitive portion 134 does not have to be circular, and any shape may be possible as long as the portion may be arranged to correspond to a vent portion 13.

The battery module according to embodiments may further include a second fire-extinguishing cell 140, and the second fire-extinguishing cell 140 may be arranged below the first fire-extinguishing cell 130 based on the injection direction of the first fire-extinguishing material discharged from the first fire-extinguishing cell 130. The second fire-extinguishing cell 140 may be arranged on the movement path of the first fire-extinguishing material, and as a specific example, the second fire-extinguishing cell 140 may be positioned below the first fire-extinguishing cell 130 based on the direction in which gravity acts.

In some embodiments, the second fire-extinguishing cell 140 may be arranged between a plurality of battery cells 10. In some embodiments, the second fire-extinguishing cell 140 may be manufactured in the form of a spacer by compressing a second fire-extinguishing material in solid powder form. Hence, the second fire-extinguishing cell 140 may have the form of a compacted solid powder and not have a separate casing or housing. In some embodiments, a battery cell 10 may include a pair of main surfaces, an upper side surface, a lower side surface opposite to the upper side surface, and a pair of side surfaces connecting the upper side surface to the lower side surface, the side surfaces including relatively smaller areas than the main surfaces, and the second fire-extinguishing cells 140 may be arranged to correspond to the main surfaces or a pair of side surfaces of battery cells 10 so that a plurality of battery cells 10 do not come into direct contact with one another.

In this case, the second fire-extinguishing cells 140 may maintain a predetermined spacing between the plurality of battery cells 10 in the battery module and perform an insulating function to prevent heat transfer between the plurality of battery cells 10. In some embodiments, when thermal runaway occurs in a battery cell 10, the oxygen surrounding the battery cell 10 may be blocked to effectively suppress thermal runaway and thermal runaway propagation of the battery cell 10.

In some embodiments, the second fire-extinguishing cell 140 may include a second fire-extinguishing material in solid powder form which is compressed and manufactured in the shape of a spacer and may further include a synthetic resin coating thinly applied to a surface of the second fire-extinguishing material.

Through this, the shape of the second fire-extinguishing cell 140 may be maintained more stably, and in case that thermal runaway occurs within the battery module, the synthetic resin coating may be melted to expose the second fire-extinguishing material, thereby performing cooling and fire-extinguishing functions.

In some embodiments, the first fire-extinguishing material stored in the first fire-extinguishing cell 130 and the second fire-extinguishing material included in the second fire-extinguishing cell 140 may include different components. The first fire-extinguishing material and the second fire-extinguishing material may include suffocating materials which extinguish fire by blocking oxygen. Accordingly, in case that thermal runaway in a battery cell 10 occurs, oxygen around the battery cell 10 may be blocked to prevent the thermal runaway from propagating to other battery cells 10 adjacent to the battery cell 10. In this regard, the first fire-extinguishing material and the second fire-extinguishing material each may include a material which causes a foaming reaction when combined with one another. In some embodiments, in case that the first fire-extinguishing material and the second fire-extinguishing material are combined with one another, a large amount of carbon dioxide may be generated, and a foaming reaction may be performed to create a fire-extinguishing foam. The generated foam may block internal oxygen and prevent heat transfer or fire spread to the battery cells 10 adjacent thereto. In some embodiments, the first fire-extinguishing material may include an aqueous solution of aluminum sulfate (Al₂(SO₄)₃), and the second fire-extinguishing material may include solid sodium bicarbonate (NaHCO₃), but this is not limited thereto.

In case that the temperature of a battery cell 10 increases, a heat-sensitive portion 134 of the first fire-extinguishing cell 130 may be melted in response to the heat, forming an opening so that the first fire-extinguishing material may be sprayed, and as a specific example, the first fire-extinguishing material may be sprayed toward the battery cells 10 and the second fire-extinguishing cells 140 arranged below the first fire-extinguishing cell 130 along the direction of gravity. In case that the first fire-extinguishing material is sprayed toward a second fire-extinguishing cell 140, the first fire-extinguishing material and the second fire-extinguishing material may be combined with one another, and for example, when the second fire-extinguishing material dissolves in an aqueous solution and reacts, a large amount of carbon dioxide may be generated and foams may be generated, which may block oxygen around a battery cell 10. Through this, the battery cell 10 may be cooled while effectively preventing thermal runaway and thermal runaway propagation of the battery cell 10.

In some embodiments, the second fire-extinguishing material may further include a foaming component such as saponin. This may effectively suffocate fire by generating a large amount of foam and blocking oxygen.

In some embodiments, the second fire-extinguishing cell 140 may further include a preservative and stabilizer to prevent denaturation of the second fire-extinguishing material. In some embodiments, the second fire-extinguishing cell 140 may further include sodium benzoate or water-soluble protein.

According to the embodiments of the disclosure, the first fire-extinguishing cell 130 may cool the heat generated from a battery cell 10, and the second fire-extinguishing cells 140 may insulate spacing between a plurality of battery cells 10 arranged adjacent to one another.

In some embodiments, in case that the temperature of a battery cell 10 continues to increase despite this, the first fire-extinguishing material may be discharged from the first fire-extinguishing cell 130 toward a battery cell 10 and a second fire-extinguishing cell 140 by high-temperature gas and flame generated in a vent portion 13. In this regard, the first fire-extinguishing material and the second fire-extinguishing material react with one another to generate carbon dioxide and foam, thereby blocking oxygen around a battery cell 10. Through this, the first fire-extinguishing cell 130 and the second fire-extinguishing cell 140 may extinguish fire in the battery cell 10 and prevent thermal runaway from propagating to other battery cells 10 adjacent to the battery cell 10. At the same time, the first fire-extinguishing cell 130 and the second fire-extinguishing cell 140 may cool and insulate the battery cell 10 to prevent the temperature of other battery cells 10 adjacent to the battery cell 10 from increasing and causing additional thermal runaway. According to the embodiments of the disclosure, a first fire-extinguishing material and a second fire-extinguishing material may be included in a battery module, and the first fire-extinguishing material and the second fire-extinguishing material may react with one another when thermal runaway of the battery module occurs, thereby extinguishing the battery module at an early stage when thermal runaway of a battery cell occurs, and preventing the thermal runaway from propagating to the entire battery module in advance. In some embodiments, a first fire-extinguishing cell including a first fire-extinguishing material may be arranged adjacent to a terminal portion of a battery cell to cool heat generated from the battery cell, and a second fire-extinguishing cell including a second fire-extinguishing material may be arranged between a plurality of battery cells to provide a structure capable of maintaining spacing between the plurality of battery cells and providing insulation.

In conclusion, the embodiments of the disclosure may improve the safety and performance of a battery module.

However, the effects obtainable through the disclosure are not limited to the effects described herein, and other technical effects not mentioned will be clearly understood by those skilled in the art from the description of the disclosure described herein.

Although the disclosure has been described herein by means of limited embodiments and drawings, the disclosure is not limited thereto, and it is obvious that various modifications and variations are possible within the scope of the technical idea of the disclosure and the equivalent scope of the claims to be described herein by a person skilled in the art to which the disclosure pertains.

## Claims

1. A battery module (100), comprising:
a plurality of battery cells (10); and
a first fire-extinguishing cell (130) arranged above the plurality of battery cells (10) and including, at the bottom thereof, a heat-sensitive portion (134) configured to open when a heat-sensitive reaction occurs, wherein
the first fire-extinguishing cell includes (130) an upper frame (132) and a lower frame (133) which form a space in which a first fire-extinguishing material is accommodated, and
the heat-sensitive portion (134) is arranged in the lower frame (133), or wherein the battery module (100) further comprises a second fire-extinguishing cell (140) arranged between the plurality of battery cells.

2. The battery module (100) of claim 1, wherein:
each of the plurality of battery cells (10) includes a vent portion (13), and
the heat-sensitive portion is positioned to overlap with the vent portion (13).

3. The battery module (100) of claim 1 or claim 2, wherein the first fire-extinguishing material includes an aluminum sulfate aqueous solution.

4. The battery module (100) of one of claims 1 to 3, wherein the heat-sensitive portion (134) includes any one of an acrylonitrile butadiene styrene (ABS) resin, polypropylene (PP), polycarbonate (PC), polyethylene (PE), or polytetrafluoroethylene (PFA).

5. The battery module (100) of one of claims 1 to 4, wherein the second fire-extinguishing cell (140) includes a second fire-extinguishing material different from the first fire-extinguishing material.

6. The battery module (100) of one of claims 1 to 5, wherein:
the first fire-extinguishing material includes a liquid form, and
the second fire-extinguishing material includes a solid form.

7. The battery module (100) of one of claims 1 to 6, wherein the battery module (100) is configured such that foam is generated when the first fire-extinguishing material and the second fire-extinguishing material are combined with one another.

8. The battery module (100) of one of claims 1 to 7, wherein the second fire-extinguishing material includes sodium bicarbonate.

9. The battery module (100) of one of claims 1 to 8, wherein the second fire-extinguishing material includes saponin.

10. The battery module (100) of one of claims 1 to 9, wherein the second fire-extinguishing cell (140) includes a second fire-extinguishing material in a solid powder form, the second fire-extinguishing material being compressed and having a surface coated with a synthetic resin.
